(19)

Europäisches
Patentamt

European
Patent Office

Office européen
des brevets

(11) **EP 3 130 652 A1**

(12) **EUROPEAN PATENT APPLICATION**

(43) Date of publication:
**15.02.2017 Bulletin 2017/07**

(21) Application number: **16001528.5**

(22) Date of filing: **08.07.2016**

(51) Int Cl.:
**C10B 55/00** (2006.01)　　　**C10G 45/04** (2006.01)
**C10G 69/06** (2006.01)　　　**C10B 57/04** (2006.01)
**C10B 31/04** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.07.2015 JP 2015137695**

(71) Applicant: **JX Nippon Oil & Energy Corporation Chiyoda-ku Tokyo 100-8162 (JP)**

(72) Inventors:
• **Kawachi, Horishi**
  **Tokyo, 100-8162 (JP)**
• **Nakanishi, Kazuhisa**
  **Tokyo, 100-8162 (JP)**
• **Oyama, Takashi**
  **Tokyo, 100-8162 (JP)**

(74) Representative: **Müller-Boré & Partner Patentanwälte PartG mbB Friedenheimer Brücke 21 80639 München (DE)**

(54) **PETROLEUM NEEDLE COKE FOR GRAPHITE ELECTRODE AND METHOD OF PRODUCING THE SAME**

(57)　Provided are a petroleum needle coke having a sufficiently low coefficient of thermal expansion (CTE) and achieving suppression of puffing and a method of producing the petroleum needle coke. Specifically provided is a petroleum needle coke for a graphite electrode. A powder of the petroleum needle coke having a grain size of 75 $\mu$m or less is heated at 2,800°C in an argon gas atmosphere to yield a graphite powder having a loop structure that is formed by folding a stack including a plurality of stacked graphite crystal sheets, the graphite crystal sheet includes carbon atoms arranged in a plane, the graphite powder has an edge surface of the closed loop structure of the stack, and a loop formed by two adjacent layers on an innermost periphery of the stack has a stack angle of 5° or less. The stack angle is an angle formed by a tangent line at a point A and a tangent line at a point B, where each of the point A and the point B is 10 nm apart from a vertex of the loop and on the corresponding layer of the two adjacent layers along the basal plane, and the vertex of the loop is an outermost point on the edge surface of the loop on the innermost periphery.

EP 3 130 652 A1

**Description**

BACKGROUND OF THE INVENTION

1. FIELD OF THE INVENTION

The present invention relates to a petroleum coke and more specifically relates to a petroleum needle coke used for a graphite electrode for electric steelmaking and to a method of producing the petroleum needle coke.

2. DESCRIPTION OF RELATED ART

Among petroleum cokes, a needle-like coke having a graphite crystal structure that grows in one direction is called "petroleum needle coke". The needle coke is typically produced from heavy oils such as petroleum heavy oil and coal tar as raw materials and is used as an aggregate of a graphite electrode for electric steelmaking. The graphite electrode is produced as follows: a needle coke with a predetermined grain size is mixed with a binder pitch at a certain ratio; the mixture is heated and kneaded and then is subjected to extrusion molding to obtain a green electrode; and the crude electrode is calcined and graphitized to yield a graphite electrode.

The graphitization is a process of heat treatment at about 3,000°C and is commonly performed by using a direct-energizing electric furnace (LWG furnace) in terms of production efficiency. However, by the method, the temperature is rapidly increased, and thus, gases derived from impurities such as sulfur components and nitrogen components in a coke are rapidly generated. This is likely to cause irreversible expansion called puffing. If the puffing occurs irreversibly expands an electrode, the electrode not only has a lower density but is also cracked in some cases.

Graphite electrodes are used in harsh conditions such as a high temperature atmosphere and thus are desired to have a low coefficient of thermal expansion (CTE). A graphite electrode having a low CTE is unlikely to deteriorate when used for electric steelmaking and may reduce the cost of electric steelmaking. To reduce the CTE of a graphite electrode, it is required to reduce the CTE of a needle coke as the raw material.

As described above, the needle coke used as the aggregate of the graphite electrodes for electric steelmaking is required to have a low CTE and to be unlikely to cause puffing after graphitization.

As the method of controlling a petroleum coke to have a low CTE and to be unlikely to cause puffing, various methods have been developed. For example, Japanese Patent No. 4809675 discloses a method of delayed coking of a mixture of a bottom oil in a residual fluidized catalytic cracking (RFCC) apparatus and a bottom oil of a vacuum residual oil. Japanese Patent No. 4809676 discloses a method of delayed coking of a mixture of a first heavy oil that is prepared by hydrodesulfurization of a heavy oil in a condition at a total pressure of 16 MPa or more and a second heavy oil in a residual fluidized catalytic cracking (RFCC) apparatus. U.S. Patent No. 5167796 discloses a method of delayed coking using a heavy oil that is prepared by hydrodesulfurization of a bottom oil in a fluidized catalytic cracking (FCC) apparatus.

SUMMARY OF THE INVENTION

To produce a petroleum needle coke, quality design is performed typically in consideration of the following formation mechanism. In other words, high temperature treatment of a heavy oil causes thermal cracking and polycondensation reaction of the heavy oil to form liquid crystal spheres called mesophase; then, some liquid crystal spheres are assembled to form a large liquid crystal intermediate called bulk mesophase; and the intermediate undergoes carbonization and solidification processes, yielding a petroleum needle coke. In order to prepare a needle coke that has a low CTE and is unlikely to cause puffing after graphitization, a raw oil and production conditions are required to be controlled so as to form a predetermined, satisfactory bulk mesophase and to generate an appropriate amount of gas at the time of carbonization and solidification.

As the raw oil to produce a petroleum needle coke, the bottom oil in a fluidized catalytic cracking apparatus, the residual oil after vacuum distillation of a low-sulfur crude oil, and the heavy oil prepared by an advanced hydrogenation desulfurization treatment (hydrodesulfurization treatment) of a high-sulfur heavy oil are typically used. However, when only the bottom oil in a fluidized catalytic cracking apparatus (fluidized catalytic cracking residual oil) is used to produce a petroleum needle coke, a satisfactory bulk mesophase is formed, but an appropriate amount of gas is not generated at the time of carbonization and solidification, and a low CTE cannot be achieved after graphitization in some cases. When only the residual oil after vacuum distillation of a low-sulfur crude oil or only the heavy oil prepared by an advanced hydrodesulfurization treatment of a high-sulfur heavy oil (hereinafter called desulfurized residual oil) is used, is a sufficient amount of gas generated at the time of carbonization and solidification, but a satisfactory bulk mesophase is not formed, and a low CTE cannot be achieved after graphitization in some cases.

A raw oil to produce a needle coke preferably has a lower sulfur content and a lower nitrogen content in order to achieve a low CTE and low puffing. The inventors of the present invention have found techniques of obtaining a petroleum coke that achieves a lower CTE and lower puffing than those by conventional techniques, by using, as a raw oil, a mixture of any of the bottom oil in a fluidized catalytic cracking apparatus, the residual oil after vacuum distillation of a low-sulfur crude oil, and the heavy oil prepared by an advanced hydrodesulfurization treatment of a high-sulfur heavy oil (Japanese Patent No. 4809675 and Japanese Patent No. 4809676).

Recently, in the petroleum industry, as the demand for fuel materials that are energy carriers such as gasoline, kerosene, diesel oil, and heavy oil has decreased, end products have been shifting to petrochemical feedstocks. In oil refinery operations, high cracking operation of a fluidized catalytic cracking apparatus is required in order to yield petrochemical feedstocks such as propylene to a maximum extent, instead of gasoline, from crude oil. In addition, in order to reduce production costs, a heavier residual oil is charged into a fluidized catalytic cracking apparatus to further extract petrochemical feedstocks, and the resulting highly cracked, heavy fluidized catalytic cracking residual oil has higher sulfur content and higher nitrogen content than those of conventional fluidized catalytic cracking residual oils. This technique has been increasingly used, and fluidized catalytic cracking residual oils having high sulfur contents and high nitrogen contents are now produced in larger amounts than conventional fluidized catalytic cracking residual oils having low sulfur contents and low nitrogen contents.

Japanese Patent No. 4809676 and U.S. Patent No. 5167796 disclose techniques of producing a needle coke that achieves a lower CTE and lower puffing after graphitization, by using, as the raw oil of the needle coke, a heavy oil having a lower sulfur content and a lower nitrogen content prepared by hydrodesulfurization treatment of a conventional fluidized catalytic cracking residual oil.

In contrast, the fluidized catalytic cracking residual oil produced by the above high cracking operation of a fluidized catalytic cracking apparatus has a higher sulfur content and a higher nitrogen content than those of conventional oils and contains large amounts of polyaromatic components from which it is difficult to remove sulfur. Thus, the desulfurization rate and the denitrogenation rate by hydrodesulfurization are reduced. Even if the fluidized catalytic cracking residual oil prepared by the high cracking operation of a fluidized catalytic cracking apparatus is subjected to hydrodesulfurization treatment, it is difficult to yield a fluidized catalytic cracking residual oil having a low sulfur content and a low nitrogen content that are equivalent to those of a heavy oil after hydrodesulfurization treatment of a conventional fluidized catalytic cracking residual oil. As described above, there is a demand for an advanced technique to yield, from such a heavy oil, an intended needle coke that achieves a low CTE and low puffing.

In view of the above circumstances, the present invention has an object to provide a petroleum needle coke having a sufficiently low coefficient of thermal expansion (CTE) and achieving suppression of puffing even when a fluidized catalytic cracking residual oil having a high sulfur content is used as the raw material.

The inventors of the present invention have intensively researched in order to achieve the object, and as a result, have found that by using a fluidized catalytic cracking residual oil prepared by hydrodesulfurization of a fluidized catalytic cracking residual oil with a particular catalyst system and further combining an optimum heavy oil from the formation mechanism of a petroleum needle coke, a petroleum needle coke having novel characteristics can be produced.

An aspect of the present invention provides a petroleum needle coke for a graphite electrode. A powder of the petroleum needle coke having a grain size of 75 $\mu$m or less is heated at 2,800°C in an argon gas atmosphere to yield a graphite powder having a loop structure that is formed by folding a stack including a plurality of stacked graphite crystal sheets, the graphite crystal sheet includes carbon atoms arranged in a plane, the graphite powder has an edge surface of the closed loop structure of the stack, and a loop formed by two adjacent layers on an innermost periphery of the stack has a stack angle of 5° or less. The stack angle is an angle formed by a tangent line at a point A and a tangent line at a point B, where the point A is 10 nm apart from a vertex of the loop and on one layer of the two adjacent layers along a basal surface, the point B is 10 nm apart from the vertex of the loop and on the other layer of the two adjacent layers along a basal surface, and the vertex of the loop is an outermost point on the edge surface of the loop on the innermost periphery.

Another aspect of the present invention provides a method of producing a petroleum needle coke for a graphite electrode. The method includes a step of bringing a fluidized catalytic cracking residual oil into contact with a catalyst layer (A) having an average pore size of 140 to 200 Å and then with a catalyst layer (B) having an average pore size of 80 to 110 Å to hydrodesulfurize the fluidized catalytic cracking residual oil to yield a first heavy oil, each of the catalyst layer (A) and the catalyst layer (B) being prepared by packing a catalyst that includes an inorganic oxide carrier supporting one or more metals selected from Group 6A metals and Group 8 metals in the periodic table, and a step of coking a mixed oil containing at least the first heavy oil and a second heavy oil at 400 to 600°C, the second heavy oil having a sulfur content of 0.4% by mass or less and not containing the first heavy oil.

As described above, according to the present invention, a petroleum needle coke having a sufficiently low coefficient of thermal expansion (CTE) and sufficiently achieving suppression of puffing can be stably produced.

BRIEF DESCRIPTION OF THE DRAWINGS

FIG. 1 is a transmission electron micrograph (magnification $5.0 \times 10^5$) of a sample after graphitization of a calcined coke obtained in Example 1.

FIG. 2 is a transmission electron micrograph (magnification $5.0 \times 10^5$) of a sample after graphitization of a calcined coke obtained in Comparative Example 1.

FIG. 3 is a schematic view of a structure of a graphite powder after graphitization of a petroleum needle coke obtained by the present invention.

DESCRIPTION OF PREFERRED EMBODIMENTS

Embodiments for carrying out the present invention will now be described in detail, but the scope of the invention is not intended to be limited to the embodiments.

A raw oil used for production of a petroleum needle coke of the present invention will be described hereinafter. The raw oil is preferably a mixed oil containing at least a first heavy oil and a second heavy oil that does not contain the first heavy oil and has a sulfur content of 0.4% by mass or less.

(1) First heavy oil

The first heavy oil is prepared by a predetermined hydrodesulfurization treatment of a fluidized catalytic cracking residual oil preferably having a sulfur content of not less than 0.5% by mass and less than 1.5% by mass and preferably having an aromatic content of not less than 50% by mass and less than 90% by mass. The upper limit of the sulfur content in the fluidized catalytic cracking residual oil is more preferably 1.0% by mass. If the fluidized catalytic cracking residual oil has a sulfur content of more than 1.5% by mass, a resulting petroleum needle coke may have difficulty in sufficiently suppressing puffing in some cases even after hydrodesulfurization by the method described later. The sulfur content can be determined by the method described in JIS M 8813-appendix 2: 2006. The lower limit of the aromatic content in the fluidized catalytic cracking residual oil is more preferably 70% by mass. The content of the aromatic component and the contents of the saturated component and the asphaltene component described later can be determined by a TLC-FID method. The TLC-FID method is a method in which a sample is separated into four components of a saturated component, an aromatic component, a resin component, and an asphaltene component by thin-layer chromatography (TLC), and then each component is detected by a flame ionization detector (FID). Each component amount is expressed as the component content in terms of percentage relative to the total amount of the components. First, 0.2 g $\pm$ 0.01 g of a sample is dissolved in 10 ml of toluene to prepare a sample solution. At a lower end of a previously baked silica gel rod-like thin layer (chromarod) (at a 0.5-cm position of a rod holder), 1 $\mu$l of the sample solution is spotted by using a microsyringe, and is dried with a dryer or the like. Next, 10 chromarods are regarded as a set, and the sample is developed with developing solvents. As the developing solvents, hexane is used in a first development chamber, hexane/toluene (a volume ratio of 20:80) is used in a second development chamber, and dichloromethane/methanol (a volume ratio of 95:5) is used in a third development chamber. The saturated component is eluted and developed in the first development chamber in which hexane is used as the solvent. The aromatic component is eluted and developed, after the first development, in the second development chamber. The asphaltene component is eluted and developed, after the first development and the second development, in the third development chamber in which dichloromethane/methanol are used as the solvent. The chromarods after the development are set in a measurement apparatus (for example, "IATROSCAN MK-5" (trade name) manufactured by Diatron (Mitsubishi Chemical Iatron)), and each component amount is measured with a flame ionization detector (FID). The respective component amounts are summed up to yield a total amount of all the components.

The heavy oil as the raw material of the fluidized catalytic cracking residual oil may be any heavy oil capable of satisfying the above sulfur content and aromatic content conditions after fluidized catalytic cracking. The heavy oil is preferably a hydrocarbon oil having a density at 15°C of 0.8 g/cm$^3$ or more, and is exemplified by atmospheric distillation residual oil, vacuum distillation residual oil, shale oil, tar sand bitumen, Orinoco tar, coal liquid, and heavy oils prepared by hydrorefining these. The density is a value determined by the method described in JIS K 2249-1: 2011.

The atmospheric distillation residual oil is a fraction that is obtained by subjecting a crude oil to an atmospheric distillation apparatus. For example, a crude oil is heated at normal pressure to be separated, depending on boiling points of components, into a gas, LPG, and gasoline fraction, a kerosene fraction, a diesel oil fraction, and the atmospheric residual oil, which has the highest boiling point. The heating temperature varies with the production area of a crude oil and the like, and may be any temperature at which components can be distilled into these fractions. For example, a crude oil is heated at 320°C. The vacuum distillation residual oil (VR) is prepared as follows: a crude oil is subjected to an atmospheric distillation apparatus to yield gas, diesel oil, and atmospheric residual oil; and then the atmospheric residual oil is subjected to a vacuum distillation apparatus, for example, at a reduced pressure of 10 to 30 Torr while the furnace outlet temperature is changed from 320 to 360°C, yielding a bottom oil in the vacuum distillation apparatus as the vacuum distillation residual oil.

The raw material of the fluidized catalytic cracking residual oil can contain relatively light oils such as straight-run diesel oil, vacuum diesel oil, desulfurized diesel oil, and desulfurized vacuum diesel oil in addition to the above heavy oil. In particular, vacuum diesel oil, for example, desulfurized vacuum diesel oil is preferred. The vacuum diesel oil is, for example, preferably a desulfurized vacuum diesel oil (preferably having a sulfur content of 500 ppm by mass or less and a density at 15°C of 0.8/cm$^3$ or more) prepared by direct desulfurization of an atmospheric distillation residual oil.

The conditions of the fluidized catalytic cracking may be any conditions capable of satisfying the above sulfur content and aromatic content conditions. For example, the reaction temperature may be 480 to 560°C, the total pressure may be 1 to 3 kg/cm$^2$G, the ratio of a catalyst and an oil (catalyst/oil) may be 1 to 20, and the contact time may be 1 to 10 seconds. The catalyst used for the fluidized catalytic cracking is exemplified by a zeolite catalyst, a silica-alumina catalyst, and a catalyst prepared from such a catalyst on which a noble metal such as platinum is supported.

(2) Hydrodesulfurization for yielding first heavy oil

The first heavy oil can be prepared by subjecting the above fluidized catalytic cracking residual oil to predetermined hydrodesulfurization. The hydrodesulfurization system may employ a catalyst system in accordance with JP 2013-209528 A or JP 2013-209529 A, for example. Specifically, a fluidized catalytic cracking residual oil is hydrodesulfurized by using two catalyst layers in such a manner as to bring the fluidized catalytic cracking residual oil into contact with a catalyst layer (A) having an average pore size of 140 to 200 Å and then with a catalyst layer (B) having an average pore size of 80 to 110 Å, where each catalyst layer is prepared by packing a catalyst that includes an inorganic oxide carrier supporting one or more metals selected from Group 6A metals and Group 8 metals in the periodic table, yielding a desulfurized fluidized catalytic cracking residual oil. In some cases, a fluidized catalytic cracking residual oil may be hydrodesulfurized by using three catalyst layers in such a manner as to bring the fluidized catalytic cracking residual oil into contact with the catalyst layer (A), then with the catalyst layer (B), and further with a catalyst layer (C) having an average pore size of 65 to 79 Å, yielding a desulfurized fluidized catalytic cracking residual oil. A desulfurization catalyst used for hydrodesulfurization of a heavy oil in conventional production methods typically has a small pore size of about 80 Å. Polyaromatic components have large steric hindrance due to the molecule sizes thereof and thus are unlikely to enter the pores of such a catalyst. Thus, the desulfurization reaction does not satisfactory proceed in some cases, and cannot yield a high desulfurization rate. According to the present invention, the hydrodesulfurization system described below can be used to remove large amounts of polyaromatic components from a fluidized catalytic cracking residual oil, and the desulfurization rate can be improved. On this account, the fluidized catalytic cracking residual oil after the treatment with the hydrodesulfurization system can contain sufficient amounts of bicyclic and tricyclic aromatic components, which are considered to be preferred for satisfactory formation of a bulk mesophase.

The hydrodesulfurization system may include two catalyst layers of the catalyst layer (A) and the catalyst layer (B) described later, for example, by packing predetermined catalysts in a fixed bed reactor, or may include three layers by forming, subsequent to the formation of the catalyst layer (A) and the catalyst layer (B), a catalyst layer (C). In this case, the fluidized catalytic cracking residual oil is brought into contact with the catalyst layers (A) and (B) or with the catalyst layers (A) to (C) in this order, undergoing hydrodesulfurization.

First, a catalyst A used in the catalyst layer (A) will be described. The main component accounting for 85% by mass or more of the inorganic oxide carrier in the catalyst A is exemplified by alumina, silica-alumina, alumina-boria, alumina-zirconia, alumina-titania, and combinations thereof, and is preferably alumina and silica-alumina. Such a carrier may contain 0.5 to 5% by mass of phosphorus based on the carrier. A catalyst containing phosphorus has higher desulfurization activity and thus is preferred.

The catalyst A essentially has an average pore size of 140 to 200 Å and preferably 150 to 180 Å. By the catalyst A, the nuclei of tricyclic and higher cyclic (especially pentacyclic and hexacyclic) sulfur compounds are hydrogenated to break the bulky planar polyaromatic stereostructure, and accordingly, the hydrogenated products are likely to be desulfurized in the subsequent catalyst layers having smaller pores. If the catalyst A has an average pore size of less than 140 Å, polycyclic sulfur compounds cannot be sufficiently diffused in the catalyst pores, and sufficient nuclear hydrogenation effect cannot be achieved. If the catalyst A has an average pore size of more than 200 Å, the packing density of the catalyst is reduced, and sufficient nuclear hydrogenation effect cannot be achieved. In the present invention, the average pore size of a catalyst is a value determined by mercury porosimetry or a BJH method.

As the Group 6A metal supported on the carrier, molybdenum or tungsten is used. The supporting amount thereof is preferably 3 to 22% by mass in terms of the oxide thereof relative to the amount of the catalyst. In the case of two layers, the supporting amount is more preferably 8 to 15% by mass, and in the case of three layers, the supporting amount is more preferably 8 to 20% by mass. If the supporting amount is less than 3% by mass, sufficient desulfurization and denitrogenation activities are unlikely to be achieved. If the supporting amount is more than 22% by mass, metals aggregate, and the desulfurization activity is likely to be reduced. As the Group 8 metal, cobalt and/or nickel are used. The supporting amount thereof is preferably 0.2 to 12% by mass in terms of the oxide thereof relative to the amount of the catalyst. In the case of two layers, the supporting amount is more preferably 1 to 10% by mass, and in the case of three layers, the supporting amount is more preferably 1 to 12% by mass.

The proportion of the catalyst layer (A) relative to all the catalyst packed layers is preferably 10 to 30% by volume and more preferably 15 to 25% by volume when all the catalyst packed layers are two layers or three layers. If the proportion is less than 10% by volume, sufficient nuclear hydrogenation effect cannot be achieved. If the proportion is more than 30% by volume, the packing amount of a catalyst in subsequent steps is reduced, and thus the desulfurization activity in the subsequent steps becomes insufficient.

Next, a catalyst B used in the catalyst layer (B) will be described. The main component accounting for 85% by mass or more of the inorganic oxide carrier in the catalyst B is exemplified by alumina, silica-alumina, alumina-boria, alumina-zirconia, alumina-titania, and combinations thereof. In the case of two layers, the main component is preferably alumina-boria, silica-alumina, and alumina-titania and particularly preferably alumina-boria and alumina-titania. In the case of three layers, the main component is preferably alumina and silica-alumina. Such a carrier may contain 0.5 to 5% by mass of phosphorus based on the carrier. A catalyst containing phosphorus has higher desulfurization activity and thus is preferred.

The catalyst B essentially has an average pore size of 65 to 110 Å, preferably 70 to 100 Å, and more preferably 80 to 95 Å in the case of two layers. In the case of three layers, the catalyst B essentially has an average pore size of 80 to 110 Å and preferably 80 to 100 Å. By the catalyst B, the polycyclic sulfur compounds that have undergone nuclear hydrogenation in the catalyst layer (A) and has a broken, bulky planar polyaromatic stereostructure is desulfurized. If the catalyst B has an average pore size of less than the above lower limit, such sulfur compounds cannot be sufficiently diffused in the catalyst pores, and sufficient hydrogenation effect cannot be achieved. If the catalyst B has an average pore size of more than 110 Å, the packing density of the catalyst is reduced, and sufficient desulfurization effect cannot be achieved.

As the Group 6A metal supported on the carrier, molybdenum or tungsten is used. The supporting amount thereof is preferably 15 to 22% by mass in terms of the oxide thereof relative to the amount of the catalyst. In the case of two layers, the supporting amount is more preferably 17 to 20% by mass, and in the case of three layers, the supporting amount is more preferably 17 to 22% by mass. If the supporting amount is less than 15% by mass, sufficient desulfurization activity is unlikely to be achieved. If the supporting amount is more than 22% by mass, metals aggregate, and the desulfurization activity is likely to be reduced. As the Group 8 metal, cobalt and/or nickel are used. The supporting amount thereof is preferably 0.2 to 10% by mass and more preferably 1 to 8% by mass in terms of the oxide thereof relative to the amount of the catalyst in the case of two layers. In the case of three layers, the supporting amount is preferably 0.2 to 12% by mass and more preferably 1 to 12% by mass in terms of the oxide thereof relative to the amount of the catalyst.

The proportion of the catalyst layer (B) relative to all the catalyst packed layers is preferably 70 to 90% by volume and more preferably 75 to 85% by volume when all the catalyst packed layers are two layers. When all the catalyst packed layers are three layers, the proportion of the catalyst layer (B) is preferably 40 to 80% by volume and more preferably 40 to 60% by volume. If the proportion is less than the lower limit or more than the upper limit, sufficient desulfurization effect cannot be achieved.

Next, a catalyst C used in the catalyst layer (C) will be described. The main component accounting for 85% by mass or more of the inorganic oxide carrier in the catalyst C is exemplified by alumina, silica-alumina, alumina-boria, alumina-zirconia, alumina-titania, and combinations thereof, and is preferably alumina and silica-alumina. Such a carrier may contain 0.5 to 5% by mass of phosphorus based on the carrier. A catalyst containing phosphorus has higher desulfurization activity and thus is preferred.

The catalyst C essentially has an average pore size of 65 to 79 Å and preferably 70 to 79 A. The fluidized catalytic cracking residual oil also contains relatively small sulfur compounds such as bicyclic and smaller aromatic compounds, and thus, if such compounds are insufficiently desulfurized only in the catalyst layers (A) and (B), the catalyst C efficiently desulfurizes such compounds. If the catalyst C has an average pore size of less than 65 Å, such sulfur compounds cannot be sufficiently diffused in the catalyst pores, and sufficient hydrogenation effect cannot be achieved. If the catalyst C has an average pore size of more than 79 Å, the packing density of the catalyst is reduced, and sufficient desulfurization effect cannot be achieved.

As the Group 6A metal supported on the carrier, molybdenum or tungsten is used. The supporting amount thereof is preferably 15 to 22% by mass and more preferably 17 to 22% by mass in terms of the oxide thereof relative to the amount of the catalyst. If the supporting amount is less than 15% by mass, sufficient desulfurization is unlikely to be achieved. If the supporting amount is more than 22% by mass, metals aggregate, and the desulfurization activity is likely to be reduced. As the Group 8 metal, cobalt and/or nickel are used. The supporting amount thereof is preferably 0.2 to 12% by mass and more preferably 1 to 12% by mass in terms of the oxide thereof relative to the amount of the catalyst.

The proportion of the catalyst layer (C) relative to all the catalyst packed layers is preferably 10 to 40% by volume, more preferably 20 to 40% by volume, and even more preferably 20 to 35% by volume. If the proportion is less than 10% by volume or more than 40% by volume, sufficient desulfurization effect is not achieved.

By bringing the fluidized catalytic cracking heavy residual oil into contact with the catalyst layer (A) and the catalyst layer (B) in this order or with the catalyst layer (A), the catalyst layer (B), and the catalyst layer (C) in this order, intended hydrodesulfurization can be performed. Specifically, in the catalyst layer (A), highly polycyclic sulfur compounds in the fluidized catalytic cracking heavy residual oil first undergo nuclear hydrogenation, and the number of rings of the polycyclic sulfur compound is reduced (for example, pentacyclic and hexacyclic aromatic compounds are converted into tricyclic and tetracyclic aromatic compounds). Next, in the catalyst layer (B), the polycyclic sulfur compounds having a smaller number of rings through the catalyst layer (A) are desulfurized (for example, desulfurization of tricyclic and tetracyclic sulfur compounds). Finally, in the catalyst layer (C), sulfur compounds that cannot be desulfurized in the catalyst layer (B) are hydrogenated, completing desulfurization of the polycyclic sulfur compounds. In this manner, by arranging catalysts in average pore size order from a larger size to a smaller size from the upstream direction and by packing the catalysts at optimum proportions, higher desulfurization performance can be achieved.

As for the configuration of the catalysts, for example, the catalyst layer (A) may contain molybdenum, cobalt, and nickel, and the catalyst layer (B) may contain molybdenum and nickel, in the case of two layers. In this case, the proportion of the catalyst layer (A) is preferably 50 to 90% by volume relative to the total volume. If the proportion is less than 50% by volume, the desulfurization activity is improved, but the amount of hydrogen consumed is likely to be increased. If the proportion is more than 90% by volume, the amount of hydrogen consumed is reduced, but the desulfurization activity is likely to be reduced. In the case of three layers, the catalysts are preferably configured in such a manner that the product of the proportion (0 to 1.0) of each catalyst layer in all the catalyst packed layers and the average pore size (Å) of the catalyst in the corresponding layer is calculated, and the sum of the respective products is 90 or more.

$$\sum[(\text{Proportion in all the catalyst packed layers}) \times (\text{average pore size})] \geq 90$$

The sum of the products of the proportions of the respective catalyst layers in all the catalyst packed layers and the average pore sizes of the catalysts in the corresponding layers simply represents the number of active sites contributing to desulfurization. Due to appropriate nuclear hydrogenation effect on polycyclic sulfur compounds in the catalyst layer (A), appropriate desulfurization effect on the polycyclic sulfur compounds is achieved in the catalyst layer (B), and sufficient desulfurization effect on relatively small sulfur compounds such as bicyclic and smaller cyclic sulfur compounds is achieved in the catalyst layer (C). Thus, the sum is preferably 95 or more and more preferably 98 or more. The upper limit is preferably 125 or less, more preferably 120 or less, and even more preferably 115 or less in order to suppress a reduction of the desulfurization performance due to an excess proportion of the catalyst layer (A) and smaller proportions of the catalyst layers (B) and (C).

For the catalysts used in the catalyst layers (A) to (C), the method of supporting a metal on a carrier may be any method and is preferably exemplified by an impregnation method.

When such catalysts of the hydrodesulfurization system are used as the catalyst for hydrodesulfurization of the fluidized catalytic cracking residual oil, the catalysts are subjected to presulfurization treatment for activation before the fluidized catalytic cracking residual oil is charged. As for the conditions of the presulfurization treatment, a sulfurizing agent is allowed to pass at a hydrogen partial pressure of 2 MPa or more, and the maximum temperature after temperature rise is 240 to 380°C and preferably 250 to 350°C. If the hydrogen partial pressure is less than 2 MPa, the sulfurization degree of molybdenum or tungsten is low, and the desulfurization activity and the denitrogenation activity are likely to be reduced. If the maximum temperature at the time of presulfurization treatment is less than 240°C, the sulfurization degree of molybdenum or tungsten is low, whereas if the maximum temperature is more than 380°C, coking is caused, and the desulfurization activity is likely to be reduced. The sulfurizing agent used in the presulfurization treatment is exemplified by hydrogen sulfide, carbon disulfide, and dimethyl disulfide, which are used for hydrorefining in oil factories.

After the presulfurization treatment, the fluidized catalytic cracking residual oil is charged in a fixed bed reactor including the hydrodesulfurization system and is subjected to hydrodesulfurization in a hydrogen atmosphere in high temperature and high pressure conditions.

The reaction pressure (hydrogen partial pressure) is preferably 4 to 12 MPa and more preferably 5 to 11 MPa. If the reaction pressure is less than 4 MPa, desulfurization and denitrogenation are likely to be markedly reduced. If the reaction pressure is more than 12 MPa, a larger amount of hydrogen is consumed to increase the operation cost.

The reaction temperature is preferably 280 to 400°C and more preferably 300 to 360°C. If the reaction temperature is less than 280°C, the desulfurization and denitrogenation activities are likely to be markedly reduced, and such a condition is not practical. If the reaction temperature is 400°C or more; thermal cracking causes ring-opening reaction. In addition, if the reaction temperature is more than 400°C, the catalyst deteriorates markedly.

The liquid hourly space velocity may be any value but is preferably 0.2 to 3 $h^{-1}$ and more preferably 0.5 to 2 $h^{-1}$. If the liquid hourly space velocity is less than 0.2 $h^{-1}$, the throughput is small to reduce the productivity, and such a condition is not practical. If the liquid hourly space velocity is more than 3 $h^{-1}$, the reaction temperature is increased, accelerating the deterioration of the catalyst.

The hydrogen/oil ratio is preferably 180 to 700 $Nm^3/m^3$ and more preferably 250 to 600 $Nm^3/m^3$. If the hydrogen/oil ratio is less than 180 $Nm^3/m^3$, the desulfurization activity is reduced. If the hydrogen/oil ratio is more than 700 $Nm^3/m^3$, the desulfurization activity is not greatly changed, but the operation cost increases.

In the first heavy oil obtained in this manner, the content of bicyclic aromatic components is preferably 20% by mass or more and more preferably 25% by mass or more. If the content is within such a range, polyaromatic components are considered to be hydrodesulfurized, and a satisfactory bulk mesophase can be formed at the time of production of a petroleum needle coke. The bicyclic aromatic components can be quantitatively determined by an HPLC method.

(3) Second heavy oil

The second heavy oil does not contain the first heavy oil or the fluidized catalytic cracking residual oil that is the raw oil of the first heavy oil, and preferably has a sulfur content of 0.4% by mass or less, more preferably 0.35% by mass or less, and even more preferably 0.30% by mass or less. If the sulfur content exceeds the upper limit, a resulting petroleum coke is likely to cause puffing.

The second heavy oil preferably has an asphaltene content of 5% by mass or less, more preferably 4% by mass or less, and even more preferably 3% by mass or less. If the asphaltene content exceeds the upper limit, a resulting petroleum coke is likely to have a larger coefficient of thermal expansion.

The second heavy oil preferably has a saturated component content of 60% by mass or more, more preferably 65% by mass or more, and even more preferably 70% by mass or more. If the saturated component content is less than the lower limit, a resulting petroleum coke is likely to have a larger coefficient of thermal expansion.

The second heavy oil preferably has an initial boiling point of 200°C or more and more preferably 250°C or more. The second heavy oil preferably has a density at 15°C of 0.85 to 0.94 $g/cm^3$.

The second heavy oil is preferably a hydrodesulfurized oil prepared by hydrodesulfurization of a heavy oil having a sulfur content of 2% by mass or more in conditions of a total pressure of 16 MPa or more so as to yield a hydrocracking rate of 30% or less.

The heavy oil as the raw material of the second heavy oil has a sulfur content of 2% by mass or more, preferably 2.5% by mass or more, and more preferably 3% by mass or more.

The heavy oil having a sulfur content of 2% by mass or more may be any heavy oil satisfying the above sulfur content condition, and is exemplified by crude oil, atmospheric distillation residual oil and vacuum distillation residual oil prepared by distillation of crude oil, visbreaking oil, tar sand oil, shale oil, and mixed oils thereof. Of these, atmospheric distillation residual oil and vacuum distillation residual oil are preferably used.

(4) Hydrodesulfurization for preparing second heavy oil

As for the hydrodesulfurization conditions in order to prepare the second heavy oil, the total pressure is 16 MPa or more, preferably 17 MPa or more, and more preferably 18 MPa or more. If the total pressure is less than the lower limit, the hydrodesulfurization excessively cracks a heavy oil, failing to yield a heavy oil effective as the raw oil of the petroleum coke.

Other hydrodesulfurization conditions, except the total pressure, may be any conditions as long as the hydrocracking rate is 30% or less, and various conditions are preferably set as the following conditions. In other words, the temperature of hydrodesulfurization is preferably 300 to 500°C and more preferably 350 to 450°C; the hydrogen/oil ratio is preferably 400 to 3,000 NL/L and more preferably 500 to 1,800 NL/L; the hydrogen partial pressure is preferably 7 to 20 MPa and more preferably 8 to 17 MPa; and the liquid hourly space velocity (LHSV) is preferably 0.1 to 3 $h^{-1}$, more preferably 0.15 to 1.0 $h^{-1}$, and even more preferably 0.15 to 0.75 $h^{-1}$.

The catalyst used for hydrodesulfurization (hydrodesulfurization catalyst) is exemplified by a Ni-Mo catalyst, a Co-Mo catalyst, and a combination thereof, and a commercial product is usable.

(5) Heavy oil other than first heavy oil or second heavy oil

In addition to the first heavy oil and the second heavy oil, the raw oil may contain other heavy oils and fluidized catalytic cracking residual oils at predetermined proportions. The fluidized catalytic cracking residual oil in this case is a heavy oil except for the first heavy oil or the second heavy oil, is a heavy oil preferably having a sulfur content of 0.5% by mass or less and preferably having a content of bicyclic aromatic components of 20% by mass or more, and is exemplified by a fluidized catalytic cracking residual oil prepared from a vacuum desulfurized diesel oil as the raw oil.

(6) Production of petroleum needle coke

A method of producing the petroleum needle coke will next be described. First, a raw oil (mixed oil) containing at least the first heavy oil and the second heavy oil is coked at 400 to 600°C. If only the first heavy oil is used, a satisfactory bulk mesophase is formed, but a sufficient amount of gas is not generated at the time of solidification during coking. Thus, a resulting coke is not arranged in a needle manner (in a single-axis direction), and the CTE is slightly increased in some cases. On this account, the raw oil contains at least the second heavy oil in addition to the first heavy oil. The mixing ratio of the first heavy oil and the second heavy oil in the raw oil may be any ratio. Relative to the total amount of the raw oil, the proportion of the first heavy oil is preferably 10 to 90% by mass, more preferably 50 to 90% by mass, and even more preferably 75 to 85% by mass. When the raw oil contains another heavy oil in addition to the first heavy oil and the second heavy oil, the proportion of the first heavy oil is preferably 10 to 90% by mass, more preferably 50 to 90% by mass, and even more preferably 75 to 85% by mass relative to the total amount of the raw oil. The proportion of the second heavy oil and the other heavy oil may be the remaining proportion, and the ratio of the second heavy oil and the other heavy oil is not limited to particular ratios. Alternatively, the total proportion of the first heavy oil and the other heavy oil in the raw oil is preferably 60% by mass or more and more preferably 75% by mass or more.

The coking method of the raw oil is preferably delayed coking. Specifically, preferably in a controlled coking pressure condition, a raw oil is charged in a delayed coker and is heated to undergo thermal cracking and polycondensation, yielding a crude coke. The prepared crude coke is calcined in a rotary kiln, a shaft furnace, or the like, yielding a needle coke. As for preferred running conditions of a delayed coker, the pressure is 300 to 800 kPa, and the temperature is 400 to 600°C. The calcination temperature is preferably 1,000 to 1,500°C. The crude coke contains large amounts of water and volatile components, and thus the calcination at a high temperature of 1,000°C or more enables the production of a calcined coke substantially not containing such components (petroleum needle coke). If the calcination temperature is more than 1,500°C, the calcination is not easily performed due to the limitation of an apparatus.

(7) Graphitization of petroleum needle coke

If the obtained petroleum needle coke is pulverized into a powder having a predetermined average grain size, and the powder is graphitized in predetermined conditions, a graphite powder having a multilayer structure that has at least one end with a closed loop portion is produced. In this case, the needle coke is pulverized so as to have a grain size of 75 $u$ m or less, yielding a powder. The powder is heated and graphitized in an atmosphere of an inert gas such as nitrogen, argon, or helium at 2,000 to 3,200°C, for example, at 2,800°C. The graphitized powder is diluted with a methanol solvent and placed on a measurement cell, and the crystal structure of the powder can be observed under a transmission electron microscope (TEM). The average grain size of the graphite powder can be determined with a laser scattering particle size distribution analyzer.

The graphitized powder is specifically a graphite powder having a loop structure that is formed by folding a stack including a plurality of graphite crystal sheets that each includes carbon atoms arranged in a plane, and the graphite powder has an edge surface with the closed loop structure of the stack. In other words, the graphite powder has a multilayer structure formed by stacking a plurality of graphite crystal sheets that each includes carbon atoms arranged in a plane. The multilayer structure includes an innermost layer and a plurality of layers spaced a predetermined distance apart from the outside of the innermost layer. The innermost layer has a semicircular, closed loop portion that connects at least one end of a graphite crystal sheet and at least one end of the adjacent graphite crystal sheet. Each of the layers outside the innermost layer also has a semicircular, closed loop portion that connects at least one end of a graphite crystal sheet and at least one end of the adjacent graphite crystal sheet. Accordingly, the graphite powder has such a stacked loop structure, or a closed structure.

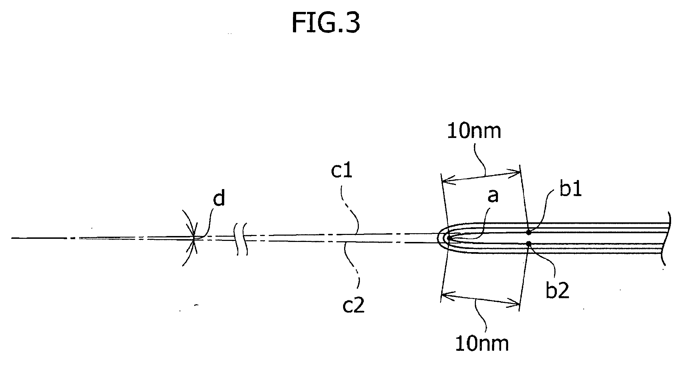

In the graphite powder observed under a transmission electron microscope, a loop formed by two adjacent layers on the innermost periphery of the stack has a stack angle of 5°or less, where the stack angle is an angle formed by a tangent line at a point A and a tangent line at a point B, the point A is 10 nm apart from a vertex of the loop and on one layer of the two adjacent layers along a basal plane, the point B is 10 nm apart from the vertex of the loop and on the other layer of the two adjacent layers along a basal plane, and the vertex of the loop is an outermost point on the edge surface of the loop on the innermost periphery. FIG. 3 is a schematic view of the structure of the powder after graphitization of the petroleum needle coke. When points that are 10 nm apart from a vertex a of the loop as the tip, or the outermost point, on the edge surface of the loop on the innermost periphery and are on two adjacent layers along the basal surface are regarded as a point b1 and a point b2, and an angle formed by a tangent line c1 at the point b1 and a tangent line c2 at the point b2 is defined as a stack angle d, the stack angle d of the loop formed by the two adjacent layers on the innermost periphery is 5° or less.

When a petroleum needle coke produced by a conventional method of producing a petroleum needle coke from a fluidized catalytic cracking residual oil containing large amounts of polyaromatic components and having a high sulfur content as a raw oil is graphitized, it has been difficult to yield a graphite powder having the structure in which carbon hexagonal network graphite crystal sheet planes are stacked in parallel. In addition, even when a fluidized catalytic cracking residual oil having a high sulfur content is hydrodesulfurized by a conventional production method, polyaromatic components that are slightly desulfurized components are unlikely to be desulfurized, and the desulfurization rate of a heavy oil is low. When the reaction temperature is increased in order to improve the desulfurization rate, thermal cracking accelerates ring-opening reactions. Thus, the amounts of polyaromatic components are not reduced, and sufficient amounts of bicyclic and tricyclic aromatic components that are considered to be suitable for the formation of a bulk mesophase cannot be obtained. Thus, a needle coke that yields a graphite powder having the structure in which carbon hexagonal network graphite crystal sheet planes are stacked in parallel cannot be obtained also in this case.

It is reported that a graphite powder having the multilayer structure with a closed loop portion can be conventionally generated when a graphite material in which carbon hexagonal network graphite crystal sheet planes are developed extremely in parallel is heated and graphitized in a noble gas atmosphere at 2,000°C or more. According to the present invention, even by using a fluidized catalytic cracking residual oil having a high sulfur content as the raw material, a needle coke that yields a graphite powder having the structure in which carbon hexagonal network graphite crystal sheet planes are arranged extremely in parallel can be stably obtained. Due to the structure in which carbon hexagonal network graphite crystal sheet planes are arranged extremely in parallel, the obtained graphite powder has a sufficiently low CTE and can achieve sufficiently small puffing.

The petroleum needle coke can be used as an aggregate of a graphite electrode for electric steelmaking. The method of producing a graphite electrode is exemplified by a processing method in which an appropriate amount of a binder pitch is added to a petroleum needle coke pulverized to have a grain size of 75 $\mu$m or less, then the mixture is heated and kneaded and then is subjected to extrusion molding to yield a crude electrode, and the crude electrode is burned (carbonized) and graphitized. The carbonization and graphitization treatment method may be any method and is typically exemplified by a method in which the maximum temperature is set at 900 to 1,500°C, burning (carbonization) is performed for a holding time of the maximum temperature of 0 to 10 hours, and then the maximum temperature is set at 2,500 to 3,200°C, and graphitization is performed for a holding time of the maximum temperature of 0 to 100 hours. After the carbonization, the product can be once cooled and then graphitized again, and for this operation, the above heat treatment may be performed.

The graphite electrode produced from the petroleum needle coke can have a CTE of $1.0 \times 10^{-6}$/°C to $1.3 \times 10^{-6}$/°C and a puffing of 0.2% or less even though the used raw oil has a higher sulfur content and a higher nitrogen content than those of conventional materials.

As described above, according to the present invention, a petroleum needle coke having a sufficiently low CTE and sufficiently achieving suppression of puffing can be stably obtained even when a highly degraded fluidized catalytic cracking residual oil that responds to a reduction of gasoline demand is used.

EXAMPLES

The present invention will next be specifically described with reference to examples and comparative examples, but the invention is not intended to be limited to the following examples.

<Example 1>

A desulfurized vacuum residual oil (a sulfur content of 500 ppm by mass, a density at 15°C of 0.88 g/cm$^3$) was subjected to fluidized catalytic cracking, yielding a fluidized catalytic cracking residual oil (hereinafter called "fluidized catalytic cracking residual oil (A)"). The obtained fluidized catalytic cracking residual oil (A) had an initial boiling point of 220°C, a sulfur content of 0.2% by mass, and an aromatic content of 60% by mass.

Separately, an atmospheric distillation residual oil having a sulfur content of 3.5% by mass was hydrodesulfurized in the presence of a Ni-Mo catalyst so as to yield a hydrocracking rate of 30% or less, yielding a hydrodesulfurized oil (hereinafter called "hydrodesulfurized oil (A)"). The obtained hydrodesulfurized oil (A) had an initial boiling point of 260°C, a sulfur content of 0.3% by mass, an asphaltene content of 1% by mass, a saturated component content of 70% by mass, and a density at 15°C of 0.92 g/cm$^3$.

Next, a desulfurized vacuum residual oil (a sulfur content of 500 ppm by mass, a density at 15°C of 0.88 g/cm$^3$) and the hydrodesulfurized oil (A) (an initial boiling point of 260°C, a sulfur content of 0.3% by mass, an asphaltene content of 1% by mass, a saturated component content of 70% by mass, a density at 15°C of 0.92 g/cm$^3$) were mixed at a mass ratio of 1:3, and the mixture was subjected to fluidized catalytic cracking, yielding a fluidized catalytic cracking residual oil (hereinafter called "fluidized catalytic cracking residual oil (B)"). The obtained fluidized catalytic cracking residual oil (B) had an initial boiling point of 220°C, a sulfur content of 0.7% by mass, an aromatic content of 80% by mass, a bicyclic aromatic content of 14% by mass, and a density at 15°C of 1.07 g/cm$^3$.

Next, for the hydrodesulfurization of the fluidized catalytic cracking residual oil (B), the following hydrodesulfurization system was used. As the catalysts, the catalyst 1, the catalyst 2, and the catalyst 3 prepared as below were used.

[Preparation of catalyst 1]

An aqueous basic aluminum salt solution was neutralized with an aqueous acidic aluminum salt solution to yield a hydrated alumina slurry (3 kg in terms of $Al_2O_3$). The obtained hydrated alumina slurry was washed to remove byproduct salts, yielding hydrated alumina. The hydrated alumina was adjusted to have a pH of 10.5 and was aged at 95°C for 10 hours. The slurry after the completion of aging was dehydrated and was concentrated and kneaded with a kneader to a predetermined water content, yielding a kneaded alumina. To the obtained kneaded alumina, 50 g of nitric acid was added, and the mixture was concentrated and kneaded again to a predetermined water content. Then, the resulting alumina was molded into a 1.8-mm column shape, and the molded alumina was dried at 110°C. The dried molded alumina was burned at a temperature of 550°C for 3 hours, yielding a carrier. The formulation of the carrier was 100% by mass of alumina.

Next, 226 g of molybdenum trioxide and 57 g of basic nickel carbonate were suspended in ion-exchanged water. To the suspension, 132 g of phosphoric acid was added and dissolved, yielding an impregnation liquid. Next, 1 kg of the above carrier was sprayed and impregnated with the impregnation liquid. The impregnated carrier was dried, and then burned at 550°C for 1 hour, yielding an intended catalyst 1. The average pore size of the catalyst was determined to be 150 A. The average pore size was measured by mercury porosimetry and was calculated by using a mercury surface tension of 480 dyne/cm and a contact angle of 140°. The nickel oxide content and the molybdenum oxide content were 2.5% by mass and 18% by mass, respectively, based on the catalyst.

[Preparation of catalyst 2]

A carrier was prepared in the same preparation manner as for the catalyst 1 except that 100 g of nitric acid, 479 g of commercially available silica sol, S-20L (manufactured by JGC Catalysts and Chemicals Ltd.), and 155 g of phosphoric acid were added to the obtained kneaded alumina in the carrier preparation. The formulation of the carrier was 94% by mass of alumina, 3% by mass of silica, and 3% by mass of $P_2O_5$.

A catalyst 2 was prepared in the same preparation manner as for the catalyst 1 except that 232 g of molybdenum trioxide, 23 g of basic nickel carbonate, and 76 g of cobalt carbonate were used in the impregnation liquid preparation. The average pore size of the catalyst was determined to be 100 Å. The nickel oxide content, the cobalt oxide content, and the molybdenum oxide content were 1% by mass, 3.5% by mass, and 18% by mass, respectively, based on the catalyst.

[Preparation of catalyst 3]

First, 1,000 g of a titanyl sulfate solution (5% by mass in terms of titania ($TiO_2$)), 1,900 g of pure water, and 370 g of sulfuric acid were mixed, and the mixture was stirred at 40°C for 1 hour. Then, while the mixture was stirred, 353 g of 8.5% by mass water glass was added dropwise over 1.5 hours. After the completion of the dropwise addition, the stirring was continued at 40°C for 2.5 hours. To the resulting solution, a 15% by mass aqueous ammonia was added until the pH reached 7.2, and the condition of a pH of 7.2 was maintained for 2 hours, yielding a silica-titania primary particle-containing liquid. Next, the temperature of the silica-titania primary particle-containing liquid was adjusted at 60°C, then 25.6 kg of an alumina slurry containing boehmite (3.6% by mass in terms of alumina ($Al_2O_3$)) was added, and a 15% by mass aqueous ammonia was added so as to yield a pH of 7.2. The condition of a pH of 7.2 was maintained for 1 hour, and then the mixture was dehydrated and washed to remove byproduct salts, yielding a slurry of an oxide gel. Subsequently, the same preparation as for the catalyst 1 was performed, yielding a carrier. The formulation of the carrier was 92% by mass of alumina, 3% by mass of silica, and 5% by mass of titania.

A catalyst 3 was obtained in the same preparation manner as for the catalyst 1 except that 297 g of molybdenum trioxide, 74 g of basic nickel carbonate, and 101 g of phosphoric acid were used in the impregnation liquid preparation. The average pore size of the catalyst was determined to be 75 Å. The nickel oxide content and the molybdenum oxide content were 3% by mass and 22% by mass, respectively, based on the catalyst.

First, a flow type fixed bed reactor was subjected to presulfurization. In a flow type fixed bed reactor, 20 ml of the catalyst 1, 50 ml of the catalyst 2, and 30 ml of the catalyst 3 were packed in this order. While a mixed gas (hydrogen:hydrogen sulfide = 97% by volume:3% by volume) was allowed to flow at a flow rate of 30 L/hour, the temperature of the reaction column was increased from room temperature at a rate of 10°C/min at a total pressure of 6 MPa, then was maintained at 240°C for 4 hours, next was increased to 340°C at a rate of 10°C/min, and was maintained at 340°C for 24 hours, completing the presulfurization.

Then, the fluidized catalytic cracking residual oil (B) was passed through the flow type fixed bed reactor at a rate of 70 ml/hour to be hydrodesulfurized in reaction conditions of a hydrogen partial pressure of 6 MPa, a liquid hourly space velocity of 0.7 $h^{-1}$, a hydrogen/oil ratio of 470 NL/L, and a reaction temperature of 310°C, yielding a desulfurized fluidized catalytic cracking residual oil (hereinafter called "desulfurized fluidized catalytic cracking residual oil (B-1)").

The obtained desulfurized fluidized catalytic cracking residual oil (B-1) had a bicyclic aromatic content of 28% by mass.

Next, the desulfurized fluidized catalytic cracking residual oil (B-1) and the hydrodesulfurized oil (A) were mixed at a mass ratio of 5:1, yielding a raw oil. The raw oil was placed in a test tube and subjected to heat treatment at normal pressure at 500°C for 3 hours to be coked. The resulting coke was burned at 1,000°C for 5 hours, yielding a calcined coke (needle coke).

<Example 2>

The operation was performed in the same manner as in Example 1 except that the desulfurized fluidized catalytic cracking residual oil (B-1) and the hydrodesulfurized oil (A) was mixed at a mass ratio of 3:1 to prepare a raw oil.

<Example 3>

The operation was performed in the same manner as in Example 1 except that the desulfurized fluidized catalytic cracking residual oil (B-1), the fluidized catalytic cracking residual oil (A), and the hydrodesulfurized oil (A) were mixed at a mass ratio of 2:1:1 to prepare a raw oil.

<Example 4>

The operation was performed in the same manner as in Example 1 except that the desulfurized fluidized catalytic cracking residual oil (B-1), the fluidized catalytic cracking residual oil (A), the fluidized catalytic cracking residual oil (B), and the hydrodesulfurized oil (A) were mixed at a mass ratio of 35:25:15:25 to prepare a raw oil.

<Comparative Example 1>

The operation was performed in the same manner as in Example 1 except that the fluidized catalytic cracking residual oil (B) and the hydrodesulfurized oil (A) were mixed at a mass ratio of 3:1 to prepare a raw oil.

<Comparative Example 2>

In a flow type fixed bed reactor, 62.5 ml of the catalyst 2 and 37.5 ml of the catalyst 3 were packed in this order. While a mixed gas (hydrogen:hydrogen sulfide = 97% by volume:3% by volume) was allowed to flow at a flow rate of 30 L/hour, the temperature of the reaction column was increased from room temperature at a rate of 10°C/min at a total pressure of 6 MPa, then was maintained at 240°C for 4 hours, next was increased to 340°C at a rate of 10°C/min, and maintained at 340°C for 24 hours, completing the presulfurization.

Then, the fluidized catalytic cracking residual oil (B) was passed at a rate of 70 ml/hour to be hydrodesulfurized in reaction conditions of a hydrogen partial pressure of 6 MPa, a liquid hourly space velocity of $0.7 \ h^{-1}$, a hydrogen/oil ratio of 470 NL/L, and a reaction temperature 310°C, yielding a desulfurized fluidized catalytic cracking residual oil (hereinafter called "desulfurized fluidized catalytic cracking residual oil (B-2)"). The obtained desulfurized fluidized catalytic cracking residual oil (B-2) had a bicyclic aromatic content of 19% by mass.

The operation was performed in the same manner as in Example 1 except that the desulfurized fluidized catalytic cracking residual oil (B-2) was obtained as above, and the desulfurized fluidized catalytic cracking residual oil (B-2) and the hydrodesulfurized oil (A) were mixed at a mass ratio of 3:1 to prepare a raw oil.

<Comparative Example 3>

The operation was performed in the same manner as in Example 1 except that only the desulfurized fluidized catalytic cracking residual oil (B-2) was used as the raw oil.

<Comparative Example 4>

The operation was performed in the same manner as in Example 1 except that only the desulfurized fluidized catalytic cracking residual oil (B-1) was used as the raw oil.

<Comparative Example 5>

The operation was performed in the same manner as in Example 1 except that only the hydrodesulfurized oil (A) was used as the raw oil.

[Evaluation of stack angle]

Each of the calcined cokes obtained in Examples 1 to 4 and Comparative Examples 1 and 2 was pulverized to yield a powder having an average grain size of 75 $\mu$m, and the powder was heated and graphitized in an argon gas atmosphere at 2,800°C. The graphitized sample of each of Examples and Comparative Examples was observed under a transmission electron microscope (magnification $5.0 \times 10^5$), and the stack angle of the closed loop structure was determined. The stack angles of the respective samples are shown in Table 1. The stack angle is defined as an angle formed by a tangent line at a point A and a tangent line at a point B, where each of the point A and the point B is 10 nm apart from a vertex of the loop and on the corresponding layer of two adjacent layers along the basal surface, and the vertex of the loop is the outermost point on the edge surface of the loop on the innermost periphery.

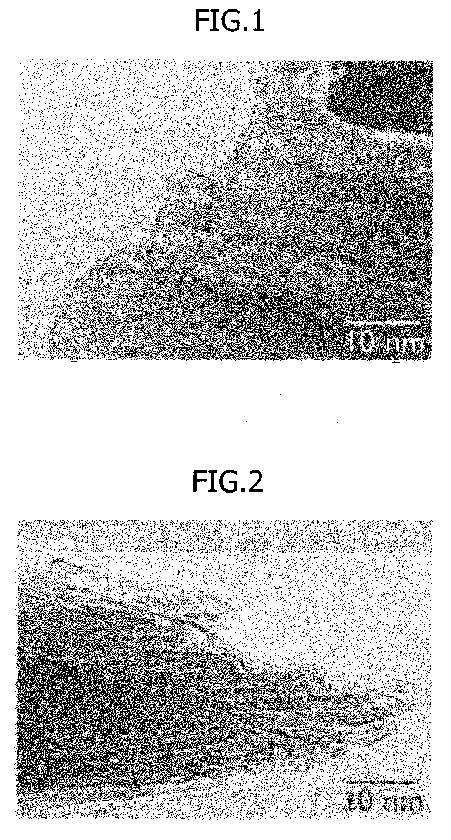

FIG. 1 is a transmission electron micrograph of the sample after graphitization of the calcined coke obtained in Example 1, and FIG. 2 is a transmission electron micrograph of the sample after graphitization of the calcined coke obtained in Comparative Example 1. From FIG. 1, the sample after graphitization of the calcined coke obtained in Example 1 was ascertained to have a structure in which a plurality of crystal structures of carbon hexagonal network planes were stacked extremely in parallel and the end was closed in a loop manner. It was also ascertained that the stack angle of the closed loop structure was less than 1° and the crystal structures of carbon hexagonal network planes were arranged extremely in parallel. In contrast, from FIG. 2, in the sample after graphitization of the calcined coke obtained in Comparative Example 1, it was ascertained that crystal structures of carbon hexagonal network planes were stacked only in a small thickness of about 2 nm and the stack angle of the closed loop structure was 20°. This is supposed to be because the raw oil of Example 1 can form a satisfactory bulk mesophase as compared with the raw oil of Comparative Example 1 and thus the crystal structures of carbon hexagonal network planes are likely to be stacked in parallel.

[Evaluation of thermal expansion 1]

Each of the calcined cokes obtained in Examples 1 to 4 and Comparative Examples 1 to 5 was pulverized and sieved in accordance with JIS Z-8801, yielding a powder having an average grain size of 1.4 mm or less. To the collected powder, a coal binder pitch was added at 30% by mass, and the mixture was kneaded and then subjected to an extruder, yielding column-like pieces. The prepared piece was burned in a muffle furnace at 1,000°C for 1 hour to prepare a measurement piece for evaluation of the coefficient of thermal expansion. In a constant temperature chamber set at 200°C, the measurement piece was placed and heated to 300°C. During the heating, the elongation of the piece in the length direction was measured, and the coefficient of thermal expansion (CTE) was calculated. Table 1 shows the results.

[Evaluation of thermal expansion 2]

Each of the calcined cokes obtained in Examples 1 to 4 and Comparative Examples 1 to 5 was pulverized, and a powder having an average grain size of 425 $\mu$m or less was collected. To the collected powder, a coal binder pitch was added at 30% by mass, and the mixture was kneaded and then subjected to an extruder, yielding column-like pieces. The prepared piece was burned in a muffle furnace at 1,000°C for 1 hour to prepare a measurement piece for evaluation of the puffing. The measurement piece was heated from room temperature to 2,800°C. During the heating, the elongation of the piece in the length direction was measured, and the coefficient of linear expansion was calculated. Table 1 shows the results. In Table 1, the puffing is the coefficient of linear expansion indicating the degree of expansion.

[Table 1]

| | Composition ratio of raw oil | | | | | Evaluation of calcined coke | | |
|---|---|---|---|---|---|---|---|---|
| | Fluidized catalytic cracking residual oil (A) | Hydrodesulfurized oil (A) | Fluidized catalytic cracking residual oil (B) | Desulfurized fluidized catalytic cracking residual oil (B-1) | Desulfurized fluidized catalytic cracking residual oil (B-2) | Stack angle after graphitization /° | CTE/ ($\times$ $10^{-6}$/°C) | Puffing /% |
| Example 1 | 0 | 17 | 0 | 83 | 0 | less than 1 | 1.1 | 0.1 |
| Example 2 | 0 | 25 | 0 | 75 | 0 | less than 1 | 1.1 | 0.1 |
| Example 3 | 25 | 25 | 0 | 50 | 0 | 3 | 1.2 | 0.1 |
| Example 4 | 25 | 25 | 15 | 35 | 0 | 5 | 1.3 | 0.2 |
| Comparative Example 1 | 0 | 25 | 75 | 0 | 0 | 20 | 1.6 | 0.7 |
| Comparative Example 2 | 0 | 25 | 0 | 0 | 75 | 10 | 1.4 | 0.3 |
| Comparative Example 3 | 0 | 0 | 0 | 0 | 100 | - | 1.7 | 0.2 |
| Comparative Example 4 | 0 | 0 | 0 | 100 | 0 | - | 1.4 | 0.1 |
| Comparative Example 5 | 0 | 100 | 0 | 0 | 0 | - | 2.0 | 0.8 |

As shown in Table 1, the powders after graphitization by heating in an argon gas atmosphere of the calcined cokes obtained in Examples 1 to 4 had a stack angle of the closed loop structure of 5° or less on average. Each measurement piece prepared from the calcined cokes obtained in Examples 1 to 4 had a coefficient of thermal expansion of $1.3 \times 10^{-6}/°C$ or less and a puffing of 0.2% or less. As described above, it is revealed that the petroleum needle coke of the present invention has a sufficiently low coefficient of thermal expansion and sufficiently achieves suppression of puffing.

**Claims**

1. A petroleum needle coke for a graphite electrode, wherein
a powder of the petroleum needle coke having a grain size of 75 $\mu$m or less is heated at 2,800°C in an argon gas atmosphere to yield a graphite powder having a loop structure that is formed by folding a stack including a plurality of stacked graphite crystal sheets, the graphite crystal sheet includes carbon atoms arranged in a plane, the graphite powder has an edge surface of the closed loop structure of the stack, and a loop formed by two adjacent layers on an innermost periphery of the stack has a stack angle of 5° or less, wherein
the stack angle is an angle formed by a tangent line at a point A and a tangent line at a point B, where the point A is 10 nm apart from a vertex of the loop and on one layer of the two adjacent layers along a basal surface, the point B is 10 nm apart from the vertex of the loop and on the other layer of the two adjacent layers along a basal surface, and the vertex of the loop is an outermost point on the edge surface of the loop on the innermost periphery.

2. A method of producing a petroleum needle coke for a graphite electrode, the method comprising:

   a step of bringing a fluidized catalytic cracking residual oil into contact with a catalyst layer (A) having an average pore size of 140 to 200 Å and then with a catalyst layer (B) having an average pore size of 65 to 110 Å to hydrodesulfurize the fluidized catalytic cracking residual oil to yield a first heavy oil, each of the catalyst layer (A) and the catalyst layer (B) being prepared by packing a catalyst that includes an inorganic oxide carrier supporting one or more metals selected from Group 6A metals and Group 8 metals in the periodic table; and
   a step of coking a mixed oil containing at least the first heavy oil and a second heavy oil at 400 to 600°C, the second heavy oil having a sulfur content of 0.4% by mass or less and not containing the fluidized catalytic cracking residual oil or the first heavy oil.

3. The method of producing a petroleum needle coke for a graphite electrode according to claim 2, wherein the step of yielding a first heavy oil includes, after the contact with the catalyst layer (B) having an average pore size of 80 to 110 Å, bringing the fluidized catalytic cracking residual oil into contact with a catalyst layer (C) having an average pore size of 65 to 79 Å.

4. The method of producing a petroleum needle coke for a graphite electrode according to claim 2 or 3, wherein the second heavy oil is a residual oil after fluidized catalytic cracking of a hydrocarbon oil having a density at 15°C of 0.8 g/cm$^3$, at a reaction temperature of 480 to 560°C and a total pressure of 1 to 3 kg/cm$^2$G in a presence of a zeolite catalyst or a silica-alumina catalyst.

5. The method of producing a petroleum needle coke for a graphite electrode according to any one of claims 2 to 4, wherein in the coking step, the mixed oil further contains a fluidized catalytic cracking residual oil, and the fluidized catalytic cracking residual oil does not contain the first heavy oil or the second heavy oil.

6. The method of producing a petroleum needle coke for a graphite electrode according to any one of claims 2 to 5, wherein in the step of yielding a first heavy oil, the inorganic oxide carrier is alumina or alumina-silica, and the catalyst is molybdenum or tungsten of the Group 6A metals in the periodic table or nickel or cobalt of the Group 8 metals in the periodic table.

## FIG.1

10 nm

## FIG.2

10 nm

# FIG.3

Europäisches
Patentamt

European
Patent Office

Office européen
des brevets

# EUROPEAN SEARCH REPORT

**Application Number**

EP 16 00 1528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 890 549 A1 (SUMITOMO METAL IND [JP]; SONY CORP [JP]) 13 January 1999 (1999-01-13) * abstract * * claims 1-3 * * figures 1,3,4,5 * | 1 | INV. C10B55/00 C10G45/04 C10G69/06 C10B57/04 C01B31/04 |
| Y | EP 2 166 062 A1 (NIPPON PETROLEUM REFINING CO [JP]) 24 March 2010 (2010-03-24) * abstract * * paragraphs [0002], [0004], [0025] * * examples 1,4,5,6 * * table 1 * * claims 1-4 * | 2-6 | |
| Y,D | JP 2013 209529 A (JX NIPPON OIL & ENERGY CORP; JGC CATALYSTS & CHEMICALS LTD) 10 October 2013 (2013-10-10) * the whole document * | 2-6 | |
| Y | DE 37 21 245 A1 (LEUNA WERKE VEB [DD]) 4 February 1988 (1988-02-04) * abstract * * claims 1-5 * * page 3, lines 5-8 * * example 2 * | 2-6 | TECHNICAL FIELDS SEARCHED (IPC) C10B C10G C01B |
| Y | EP 1 982 956 A1 (NIPPON OIL CORP [JP]; NIPPON PETROLEUM REFINING CO [JP]) 22 October 2008 (2008-10-22) * abstract * * page 9, lines 1-25 * * page 11, lines 16-39 * * page 13, lines 28-45 * * table 5 * * claims 1-12 * | 2-6 | |

The present search report has been drawn up for all claims

| Place of search | Date of completion of the search | Examiner |
|---|---|---|
| The Hague | 6 December 2016 | Mertins, Frédéric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                

& : member of the same patent family, corresponding
document

EPO FORM 1503 03.82 (P04C01)

**EP 3 130 652 A1**

## ANNEX TO THE EUROPEAN SEARCH REPORT
## ON EUROPEAN PATENT APPLICATION NO.

EP 16 00 1528

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2016

| Patent document cited in search report | | Publication date | Patent family member(s) | | Publication date |
|---|---|---|---|---|---|
| EP 0890549 | A1 | 13-01-1999 | CA | 2247319 A1 | 09-07-1998 |
| | | | CN | 1214665 A | 21-04-1999 |
| | | | EP | 0890549 A1 | 13-01-1999 |
| | | | JP | 4207230 B2 | 14-01-2009 |
| | | | KR | 100508839 B1 | 27-12-2005 |
| | | | TW | 399029 B | 21-07-2000 |
| | | | US | 6576369 B1 | 10-06-2003 |
| | | | WO | 9829335 A1 | 09-07-1998 |
| EP 2166062 | A1 | 24-03-2010 | CN | 101679872 A | 24-03-2010 |
| | | | EP | 2166062 A1 | 24-03-2010 |
| | | | JP | 5483334 B2 | 07-05-2014 |
| | | | KR | 20100039333 A | 15-04-2010 |
| | | | US | 2010181228 A1 | 22-07-2010 |
| | | | WO | 2009001610 A1 | 31-12-2008 |
| JP 2013209529 | A | 10-10-2013 | JP | 5841481 B2 | 13-01-2016 |
| | | | JP | 2013209529 A | 10-10-2013 |
| DE 3721245 | A1 | 04-02-1988 | CS | 8705727 A1 | 12-09-1989 |
| | | | DD | 262334 A3 | 30-11-1988 |
| | | | DE | 3721245 A1 | 04-02-1988 |
| | | | NL | 8701753 A | 16-02-1988 |
| EP 1982956 | A1 | 22-10-2008 | EP | 1982956 A1 | 22-10-2008 |
| | | | KR | 20080083016 A | 12-09-2008 |
| | | | US | 2009268375 A1 | 29-10-2009 |
| | | | US | 2011253593 A1 | 20-10-2011 |
| | | | US | 2011267737 A1 | 03-11-2011 |
| | | | WO | 2007074939 A1 | 05-07-2007 |

EPO FORM P0459

For more details about this annex : see Official Journal of the European Patent Office, No. 12/82

**EP 3 130 652 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4809675 B
- JP 4809676 B
- US 5167796 A
- JP 2013209528 A
- JP 2013209529 A